# EUROPEAN PATENT SPECIFICATION

(11) **EP 0 586 635 B1**
(45) Date of publication and mention of the grant of the patent: **03.06.1998**
(21) Application number: 93904062.2
(22) Date of filing: 24.02.1993
(51) Int. Cl.: H04Q 7/20, H04M 1/00, H04B 1/38

(54) **RADIO TELEPHONE**
FUNKTELEFON
RADIOTELEPHONE

(30) Priority: 28.02.1992 FI 920914
(43) Date of publication of application: 16.03.1994
(73) Proprietor: NOKIA TELECOMMUNICATIONS OY, 02150 Espoo (FI)
(72) Inventor: KOVANEN, Jari, SF-40270 Palokka (FI)
(74) Representative: Tomlinson, Kerry John
(86) International application number: FI9300065
(87) International publication number: WO9317530

(56) References cited:
- EP-A- 0 369 110
- WO-A-91/12698

## Description

### Field of the Invention

The invention relates to a radio telephone comprising a microprocessor circuitry, a memory, an alphanumeric display, a keypad, and a reading device in which a removable memory can be inserted to enable reading under control of the microprocessor circuitry, the memory containing the individual data of a radio subscriber.

### Background of the Invention

A user interface of radio telephones and corresponding radio devices typically comprises a keypad and an alphanumeric display. Via the keypad the user may dial telephone numbers, select different modes of operation and even write messages to be transmitted further. On the display are generally shown the current contents of the keypad buffer and different information relating to the operation of the phone, such as instructions to the user and data on the calls. In order to minimize the number of radio telephone types manufactured, stored and sold, it would be advisable for all the radio telephones to display identical texts. However, in order that the use might be facilitated and possibly also because of the different requirements set by different systems, the texts should be displayed in the user's own language, wherefore at least in different countries different texts or texts in different languages are needed.

German Offenlegungsschrift 3,838,677 discloses a radio telephone in which the loss of important data caused by the user is prevented during the operation of the radio telephone by storing the data in a removable memory card, in which are also stored the identification data of the radio subscriber. These important data include e.g. the last call and the mode of function of the phone. The subscriber data can be transferred from one radio telephone of a system to another similar phone in the same system by means of a memory card, which enables shared use and even renting of telephones. However, since radio telephones are provided with texts on the display in a specified language, the user may have to use a telephone in which the texts on the display are in a foreign language.

In the PCT application WO91/12698 a radio device is provided with a removable memory module, the information stored in the module defining the call functions available. In addition, a SIM card contains data which renders the phone to operate in a desired manner, e.g. in a specified language. Texts in different languages are permanently stored in the memory of the radio device; the data in the memory module only gives instructions as to which language to use. The problem is the high price of the memory capacity needed, wherefore the number of languages is limited.

### Disclosure of the Invention

The object of the invention is to provide a radio telephone in which different texts on the display or texts in different languages are simple to use.

This is achieved with a radio telephone of the type described in the introduction, the radio telephone according to the invention being characterised in that the removable memory also contains versions of the texts to be shown on the alphanumeric display in the languages selected by the user.

In the invention all the texts on the display are stored in a removable memory, such as a memory card or module, from which they can be read to the alphanumeric display of the radio telephone. Due to the invention the texts on the display of any radio telephone can be easily shown in a language selected by the user simply by inserting a removable memory, in which the texts are in the language selected, in the reading device of the radio telephone. In the same way the texts shown to the user on the display may be changed e.g. according to the country, radio telephone system or even the user.

In one embodiment of the invention, alphanumerically displayable texts are stored in the memory of a radio telephone in one language, which is used as a default language when a removable memory is not in the reading device. The microprocessor circuitry fetches a translated version for the default language text from the removable memory and displays the translation on the alphanumeric display.

In another embodiment of the invention essentially the entire user interface software of the radio telephone is stored in a removable memory and the remaining portion of the operating system of the radio telephone is stored in the memory of the radio telephone. The microprocessor circuitry loads the user interface software from a removable memory to the memory of the radio telephone when the radio telephone is switched on or the removable memory is inserted in the reading device. This makes it easy to change the entire user interface, i.e. texts, keypad functions, alarms, etc., in such a way as to be more convenient to the user. It is much simpler to change a removable memory to another than it is to change program memory circuits within a radio telephone, and it does not require any special skills.

### Brief Description of the Drawings

In the following the invention will be described by means of embodiments with reference to the attached drawing, wherein
Fig. 1 shows a perspective view of a radio telephone device according to the invention,
Fig. 2 shows a more detailed view of the display 7 of Fig. 1, and
Fig. 3 shows a schematic block diagram of the radio telephone device of Fig. 1.

### Detailed Description of the Invention

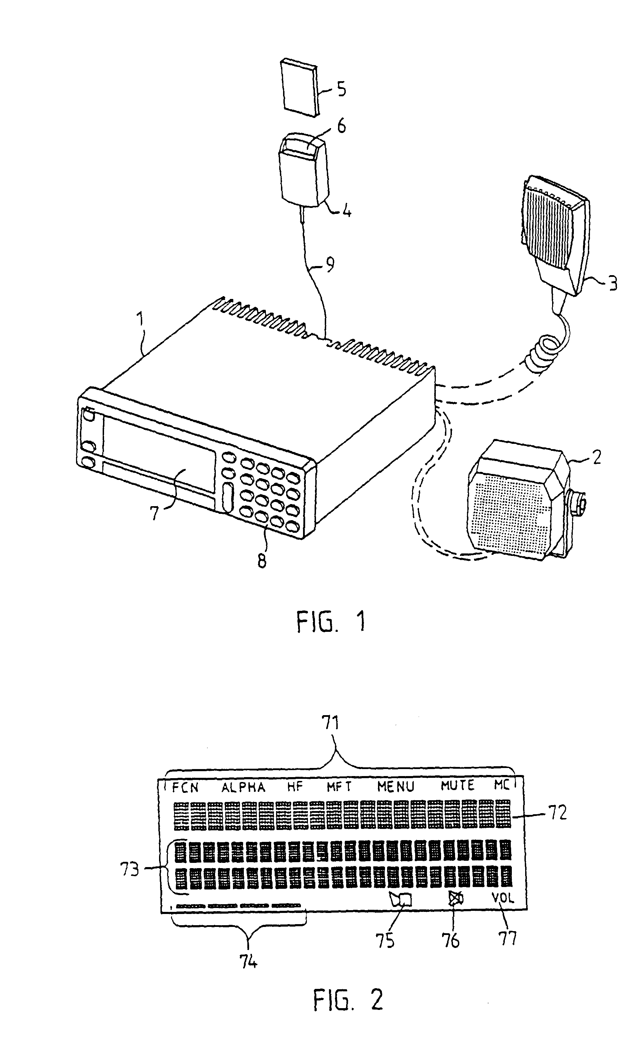

The invention may be applied to almost any kind of conventional radio telephone device, e.g. a portable mobile phone or a car phone to which is added the ability of using a removable memory. Fig. 1 shows, by way of an example, a radio telephone device of the invention which can be mounted e.g. in a vehicle, the device comprising a transceiver section 1 having a user interface formed by a display 7 and a keypad 8. To the radio telephone device may also be connected e.g. a separate microphone 3 and a separate loudspeaker 2. Further, a line 9 connects a separate reading device 4 for a memory card or module to the device, the reading device having an input slot 6, through which a removable memory 5, such as a memory card or module 5, can be inserted in the reading device 4 in such a way that it can later be easily removed or detached. An example for a portable mobile phone to which the invention can be applied is the portable mobile phone of German Offenlegungsschrift 3,838,677, said mobile phone including a reading device for a memory card.

Fig. 2 shows an enlarged, more detailed view of a possible embodiment of the display 7, which is advantageously a liquid crystal display. Reference number 71 indicates a line of indicators at the upper edge of the display 7, in which different indicator fields FCN, ALPHA, HG, MFT, MENU, MUTE and MC indicate different modes of the radio telephone. For example, field MC indicates that the memory card 5 is in use. There are further separate indicator fields 74, 75, 76 and 77 at the lower edge of the display. The actual alphanumeric display comprises two subdisplays 72 and 73. The upper subdisplay 72 comprises one alphanumeric line of display, displaying the characters or numbers keyed in via the keypad 8 (i.e. the contents of the display buffer) and being e.g. 20 characters long. The lower subdisplay 73 comprises two alphanumeric lines of display, displaying different messages concerning the operation of the radio telephone and being e.g. 24 characters long. Examples for such messages include the type of the call received, the A subscriber number, different state messages and instructions to the user. The invention may be applied e.g. to changing the language and type of the texts shown on the subdisplay 73 of the display 7 in accordance with the user's wishes.

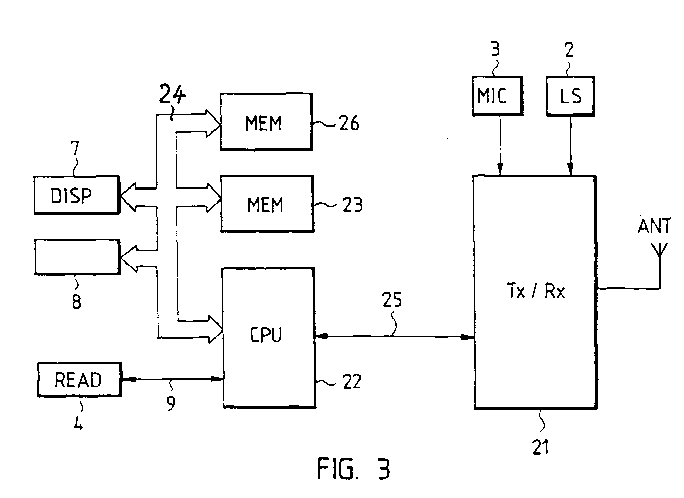

Fig. 3 shows a schematic block diagram of the radio telephone of Fig. 1, wherein a block 21 represents, in general, baseband and radio sections of a radio telephone, such as a transceiver, a synthesizer, signalling circuits, interface circuits and baseband signal processing circuits. A separate microphone 3, a separate loudspeaker 2 and a separate antenna ANT may be connected to the block 21.

Block 22 represents, in general, a microprocessor circuitry controlling the baseband and radio sections, a bus 24 or the like interconnecting the block with a read-write memory 23 used as a work memory, a non-volatile read-only memory 26 used as a program memory, and a display 7 and a keypad 8 forming a user interface. All data, control, signalling etc. connections between the radio and baseband sections 21 and the microprocessor circuitry 22 are represented generally by reference number 25.

According to the invention, a reading device 4 is connected to the microprocessor circuitry 22 by the line 9, the microprocessor circuitry 22 being capable of reading the contents of the removable memory 5 inserted in the reading device by means of said reading device. The type of the reading device is generally determined by the removable memory used. In the simplest form, the reading device 4 may here be a connecting means, which provides an electric connection between the memory circuits contained in the memory card or module 5.

The removable memory 5 may be practically any removable memory suited for the purpose. In a preferred embodiment of the invention an 8 Kbyte SRAM module BS8E1, a 16 Kbyte SRAM module BS16D1-B or a 64 Kbyte SRAM module CSC-064K-SM-04-M56 is used, depending on the storage capacity needed, all of these modules being manufactured by Fujisoku. A suitable reading device 4 is of the type CR40 and manufactured by Telenokia.

In a preferred embodiment of the invention all the texts to be displayed on the display 7 are stored in the removable memory 5 in the language selected by the user. The user interface software is then stored in the program memory 26 of the radio telephone. The texts shown on the alphanumeric display 7 may be stored in the program memory 26 in one language (e.g. English), which is used as a default language when the removable memory 5 is not in the reading device 4. The microprocessor circuitry 22 fetches a translated version for the default language text from the removable memory 5 and displays the translation on the alphanumeric display 7 when the removable memory 5 is in the reading device 4. The text displayed can then be changed by changing the type of the removable memory 5.

In yet another embodiment of the invention essentially the entire user interface software of a radio telephone is stored in a removable memory 5 and the remaining portion of the operating system of the radio telephone is stored in the program memory 26 of the radio telephone. The microprocessor circuitry 22 loads the user interface software from a removable memory 5 to the work memory 23 of the radio telephone when the radio telephone is switched on or the removable memory 5 is inserted in the reading device 4. This makes it easy to change the entire user interface, i.e. texts, keypad functions, alarms, etc., in such a way as to be more convenient to the user.

The attached drawing and the description thereof are to be understood only as illustrating the invention. The details of the radio device according to the invention may vary within the scope of the attached claims.

## Claims

1. A radio telephone comprising a microprocessor circuitry (22), a memory (23, 26), an alphanumeric display (7), a keypad (8), and a reading device (4) in which a removable memory (5) can be inserted to enable reading under control of the microprocessor circuitry, the memory containing the individual data of a radio subscriber, **characterised** in that said removable memory (5) also contains versions of the texts to be shown on the alphanumeric display (7) in the languages selected by the user.

2. A radio telephone according to claim 1, **characterised** in that alphanumerically displayable texts are stored in the memory (23, 26) of a radio telephone in one language, which is used as a default language when a removable-memory (5) is not in the reading device (4), and that the microprocessor circuitry (22) fetches a translated version for the default language text from the removable memory (5) and displays the translation on the alphanumeric display when the removable memory (5) is in the reading device (4).

3. A radio telephone according to claim 1, **characterised** in that essentially the entire user interface software of the radio telephone is stored in a removable memory (5) and the remaining portion of the operating system of the radio telephone is stored in the memory (23, 26) of the radio telephone.

4. A radio telephone according to claim 3, **characterised** in that the microprocessor circuitry (22) loads the user interface software from the removable memory (5) to the memory (23, 26) of the radio telephone when the radio telephone is switched on or the removable memory (5) is inserted in the reading device (4).

5. A radio telephone according to any one of claims 1 to 4, **characterised** in that said removable memory (5) is a memory card and that said reading device (4) is a card reading device.

6. A radio telephone according to any of claims 1 to 4, **characterised** in that said removable memory (5) contains an electronic memory circuit and that said reading device (4) is a connecting means for electrically connecting a memory circuit to a radio telephone.

## Patentansprüche

1. Funktelefon mit einer Mikroprozessor-Schaltung (22), mit einem Speicher (23, 26), mit einer alphanumerischen Anzeigeeinheit (7), mit einer Tastatur (8) und mit einer Leseeinrichtung (4), in die ein herausnehmbarer Speicher (5) eingesteckt werden kann, um unter der Steuerung der Mikroprozessor-Schaltung ein Lesen zu ermöglichen, wobei der Speicher die individuellen Daten eines Funkteilnehmers enthält,
dadurch gekennzeichnet,
daß der herausnehmbare Speicher (5) auch Versionen von Texten enthält, die auf der alphanumerischen Anzeigeeinheit (7) in den von dem Benutzer gewählten Sprachen anzuzeigen sind.

2. Funktelefon nach Anspruch 1,
dadurch gekennzeichnet,
daß alphanumerisch anzeigbare Texte in dem Speicher (23, 26) des Funktelefons in einer Sprache gespeichert sind, die als Standardsprache benutzt wird, wenn kein herausnehmbarer Speicher (5) in die Leseeinrichtung (4) eingesetzt ist, und daß die Mikroprozessor-Schaltung (22) eine übersetzte Version für den Standardsprachentext aus dem herausnehmbaren Speicher (5) ausliest und die Übersetzung auf der alphanumerischen Anzeigeeinheit anzeigt, wenn der herausnehmbare Speicher (5) in die Leseeinrichtung (4) eingesetzt ist.

3. Funktelefon nach Anspruch 1,
dadurch gekennzeichnet,
daß im wesentlichen die gesamte Benutzerschnittstellen-Software des Funktelefons in einem herausnehmbaren Speicher (5) gespeichert ist und der verbleibende Teil des Betriebssystems des Funktelefons in dem Speicher (23, 26) des Funktelefons gespeichert ist.

4. Funktelefon nach Anspruch 3,
dadurch gekennzeichnet,
daß die Mikroprozessor-Schaltung (22) die Benutzerschnittstellen-Software auf dem herausnehmbaren Speicher (5) in den Speicher (23, 26) des Funktelefons lädt, wenn das Funktelefon eingeschaltet wird oder der herausnehmbare Speicher (5) in die Leseeinrichtung (4) eingesteckt wird.

5. Funktelefon nach einem der Ansprüche 1 bis 4,
dadurch gekennzeichnet,
daß der herausnehmbare Speicher (5) eine Speicherkarte ist und daß die Leseeinrichtung (4) eine Karten-Leseeinrichtung ist.

6. Funktelefon nach einem der Ansprüche 1 bis 4,
dadurch gekennzeichnet,
daß der herausnehmbare Speicher (5) eine elektronische Speicherschaltung enthält und daß die Leseeinrichtung (4) eine Verbindungseinrichtung zum elektrischen Verbinden einer Speicherschaltung mit einem Funktelefon ist.

## Revendications

1. Radiotéléphone, comprenant :
des circuits de microprocesseur (22), une mémoire (23, 26), un dispositif d'affichage alphanumérique (7), un ensemble de touches (8), et un dispositif de lecture (4) dans lequel on peut introduire une mémoire amovible (5) pour permettre une lecture sous la commande des circuits de microprocesseur, la mémoire contenant les différentes données de l'abonné du radiotéléphone,
caractérisé en ce que ladite mémoire amovible (5) contient également des versions de textes à montrer sur le dispositif d'affichage alphanumérique (7), dans les langues choisies par l'utilisateur.

2. Radiotéléphone selon la revendication 1,
caractérisé en ce que les textes qui peuvent être affichés de manière alphanumérique sont stockés dans la mémoire (23, 26) d'un radiotéléphone, dans une langue utilisée en tant que langue par défaut lorsqu'aucune mémoire amovible (5) ne se trouve dans le dispositif de lecture (4), et en ce que les circuits de microprocesseur (22) extraient de la mémoire amovible (5) une version traduite du texte dans la langue par défaut, et affichent la traduction sur le dispositif d'affichage alphanumérique lorsque la mémoire amovible (5) se trouve dans le dispositif de lecture (4).

3. Radiotéléphone selon la revendication 1,
caractérisé en ce que sensiblement la totalité des programmes d'interface de l'utilisateur du radiotéléphone est stockée dans une mémoire amovible (5), et en ce que la partie restante du système d'exploitation du radiotéléphone est stockée dans la mémoire (23, 26) du radiotéléphone.

4. Radiotéléphone selon la revendication 3,
caractérisé en ce que les circuits de microprocesseur (22) transfèrent les programmes d'interface de l'utilisateur de la mémoire amovible (5) vers la mémoire (23, 26) du radiotéléphone lorsque ce dernier est mis en marche, ou lorsque la mémoire amovible (5) est introduite dans le dispositif de lecture (4).

5. Radiotéléphone selon l'une quelconque des revendications 1 à 4,
caractérisé en ce que ladite mémoire amovible (5) est une carte à mémoire, et en ce que le dispositif de lecture (4) est un dispositif de lecture de carte.

6. Radiotéléphone selon l'une quelconque des revendications 1 à 4,
caractérisé en ce que la mémoire amovible (5) contient un circuit électronique de mémoire, et en ce que le dispositif de lecture (4) est un moyen de connexion pour connecter électriquement un circuit de mémoire à un radiotéléphone.
